# EUROPEAN PATENT APPLICATION

(11) **EP 1 379 054 A1**
(43) Date of publication of application: **07.01.2004**
(21) Application number: 02014030.7
(22) Date of filing: 27.06.2002
(51) Int. Cl.: H04L 29/08, H04L 29/06

(54) **Data distribution system in a multiple network environment**

(71) Applicant: Sony International (Europe) GmbH, 10785 Berlin (DE)
(72) Inventor: Barletta, Antonio, Adv. Tech. Center Stuttgart, 70327 Stuttgart (DE)
(74) Representative: Müller - Hoffmann & Partner

(57) **Abstract**

Digital data provided by at least one content provider is distributed over multiple networks to at least one user by grouping the digital data to be distributed into clusters of digital data with common distribution and/or access characteristics, associating at least one network to each cluster of digital data, and transmitting each cluster of digital data via the associated at least one network. A device to distribute digital data provided by at least one content provider over multiple networks to at least one user comprises a data modeller for grouping the digital data to be distributed into clusters of digital data with common distribution and/or access characteristics and for associating at least one network to each cluster of digital data, and distribution means for distributing the respective clusters to said multiple networks for transmitting each cluster of digital data via the associated at least one network.

## Description

The present invention relates to a data distribution system in a multiple network environment, in particular to a method and a device to distribute digital data provided by at least one content provider over multiple networks to at least one user.

The current major effort in the area of digital data distribution over a multiple network environment is done by defining a common network layer among the different digital networks. The general focus is therewith an integration at the network/transport level to achieve seamless services while integrating multiple digital networks. Generally, this network integration is managed transparently only for the network providers, i.e. for a user or content provider no information is available about the data flow except the start and end nodes.

Examples of such integrated networks or the use thereof are international call systems in which the number of an international call is input by a user who does not know how the call is redirected, i.e. which nodes and networks are used, and the distribution of data by today's internet content providers which send a requested HTML page over the internet and do not know which path or network is used to transmit the data.

Therefore, it is the object underlying the present invention to introduce an alternative way to distribute digital content on a multinetwork environment.

This object is solved by a method according to independent claim 1 and a device according to independent claim 11. Preferred embodiments thereof are respectively defined in the respective following subclaims.

The method to distribute digital data provided by at least one content provider over multiple networks to at least one user according to the present invention comprises the following steps:
- grouping the digital data to be distributed into clusters of digital data with common distribution and/or access characteristics,
- associating at least one network to each cluster of digital data, and
- transmitting each cluster of digital data via the associated at least one network.

The advantage of this procedure of clustering, associating, and transmitting is that a flexible (dynamic) redirecting is possible. In particular, a content provider can easily influence the data transmission path by changing the clustering or associating parameters, e.g. an internal link inside a HTML page. During the transmission of the data, formatting or adaptation can be done, following standard mechanisms, e.g. the distribution of HTML pages over mobile phone is done using the WML format instead of HTML. Therewith, contrary to the prior art which focuses on the network/transport level, according to the present invention a multiple network environment can be optimised at the application level.

In the method according to the present invention, preferably said distribution characteristics of the digital data are set by the respective corresponding content provider.

Distribution characteristics in this sense might be:
a) service types, e.g. dependent on
   - data rate so that e.g. different network types for different requirements such as electronic program guide and program itself might be chosen, or
   - quality of service,
   - security level such as: public domain, private domain, protected domain,
   - scalability,
   - updating periods,
   - importance, and/or
   - pay per view so that e.g. different network types for view and pay might be used, and/or
b) geographical location in which the data should be transmitted such as national area, wide area, local area, micro area, personal network.

The method according to the present invention, alternatively or additionally preferably comprises the step of determining the distribution characteristics adaptively according to the status of the multiple networks.

The status in this sense might be the geographic coverage, network congestion, available networks, and/or reliability of respective networks.

In the method according to the present invention, further alternatively or additionally preferably said access characteristics of the digital data are determined based on demands and/or behaviour of the respective corresponding at least one user.

User demands and/or behaviour in this sense might be the number of accesses to different network types in different times of the day, i.e. bandwidth usage and user access pattern (statistics or real time observations or dependent on the estimated importance of the content), and/or geographical position of the target user (location based services).

In the method according to the present invention, still further alternatively or additionally preferably said grouping of the digital data to be distributed into clusters is performed based on a mathematic-heuristic model.

A mathematic-heuristic model in this sense might be understood as a fixed or dynamic cost function.

The method according to the present invention, still further alternatively or additionally preferably comprises the step of periodically updating said grouping of the digital data to be distributed into clusters of digital data with common distribution and/or access characteristics.

In the method according to the present invention, still further alternatively or additionally preferably said at least one network is associated to a cluster of digital data by way of a metadata structure.

Such a metadata structure might e.g. be a changing URL scheme as further set out below.

The method according to the present invention, still further alternatively or additionally preferably comprises the step of associating a network to a cluster of digital data according to the status of the multiple networks.

In the method according to the present invention, still further alternatively or additionally preferably a cluster of digital data is transmitted via a network according to a corresponding specific network management system of said network.

A specific network management system in this sense means that e.g. in broadcast data is streamed over a unidirectional channel or data is allocated to an internet server automatically from the respective network management system without a special adaptation of the data by the respective content provider.

A computer program product according to the present invention comprises computer program means adapted to perform the method steps or parts thereof as defined above when being executed on a computer, digital signal processor, or the like.

By parts of the method steps it is in particular included that a transmitting is only initiated and not directly performed by the computer program product.

A device to distribute digital data provided by at least one content provider over multiple networks to at least one user, according to the present invention comprises
- a data modeller for grouping the digital data to be distributed into clusters of digital data with common distribution and/or access characteristics and for associating at least one network to each cluster of digital data, and
- distribution means for distributing the respective clusters to said multiple networks for transmitting each cluster of digital data via the associated at least one network.

Preferably, the device according to the present invention further comprises a status determinator for determining the distribution characteristics or an associating scheme adaptively according to the status of the multiple networks.

Alternatively or additionally preferably, the device according to the present invention further comprises a user behaviour determinator for determining the access characteristics of the digital data according to demands and/or behaviour of the respective corresponding at least one user.

Further alternatively or additionally preferably, the device according to the present invention further comprises a model builder to determine a mathematic-heuristic model for said data modeller on which said grouping of the digital data to be distributed into clusters is based.

Such a model builder according to the present invention might work statically or dynamically, preferably based on a cost function as indicated above and further elucidated below.

Still further alternatively or additionally preferably, the device according to the present invention further comprises a metadata generator within said data modeller to determine metadata which associates a data cluster to at least one network and to attach said metadata to said cluster.

Further, a method for a content provider to charge a user for digital data provided through at least one of multiple networks by said content provider to said user, according to the present invention comprises the following steps:
- grouping the digital data to be distributed into clusters of digital data with a common charge characteristic,
- based on said charge characteristic, associating at least one network to each cluster of digital data according to a charge which the user has to pay to a network provider when accessing said data though said at least one network, and
- transmitting each cluster of digital data via the associated at least one network.

In this method according to the present invention, preferably said data is provided as broadcast data or as individually requested data.

In this method according to the present invention, alternatively or additionally preferably said digital data is distributed according to the method to distribute digital data according to the present invention as set out above.

In the light of the present invention a multinetwork environment means "the possibility to access N ≥ 1 networks contemporarily both on the provider and receiver terminal side". In general, the multinetwork environment as used also covers the case that a terminal can switch between different networks in case of availability or roaming.

Further, the term "seamless access" is used in this specification with the meaning of having a " seamless access" to multimedia content by a user terminal with access to a multinetwork environment". The terminal can access multiple networks and it resolves the retrieving of multimedia contents without direct intervention of the users.

A multinetwork environment used according to the present invention provides the framework to deliver sophisticated services leveraging the synergies of different digital media so that content providers can easily deliver a common set of digital services, like news, digital radio, TV pictures and videos, to multiple digital networks, like digital TV, digital radio, internet, mobile phone, etc. Therewith, every content provider can use any possible media in an easy way to connect to every potential user.

Further features and advantages of the method and device according to the present invention, i. e. the architecture for realizing a digital data distribution over a multi-access, multicharacteristic networks environment, will become more apparent from the following description of exemplary embodiments thereof taken in conjunction with the accompanying figures, in which
- **Fig. 1**: shows a traditional data distribution system over a multinetwork system,
- **Fig. 2a**: shows a basic diagram for distributing data over a multiple network environment according to a first preferred embodiment of the present invention,
- **Fig. 2b**: shows an architecture for modelling data distribution with an adaptive feedback closed loop according to a second preferred embodiment of the present invention,
- **Fig. 3**: shows a web-based digital data content tree to which the data distribution system according to the present invention might be applied,
- **Fig. 4**: shows the data clustering output of the modeller according to the present invention,
- **Fig. 5**: shows the data distribution on a multiple network environment according to the present invention,
- **Fig. 6**: shows a digital video distribution system according to the present invention,
- **Fig. 7**: shows an audio stream distribution using the intelligent distribution system according to the present invention,
- **Fig. 8**: shows a statistical method for calculating the probability of accessing a page, and
- **Fig. 9**: shows a user access pattern during the day and network distribution preferences.

Multinetwork environment as used in this specification means the possibility to access N (N ≥ 1) networks contemporarily both on the provider and receiver terminal side. In general, a multinetwork is used also in the case that a terminal can switch between different networks in case of availability or roaming. Moreover, the term seamless access is used in this specification with the meaning of the possibility to seamlessly access to multimedia content by a user terminal with access to a multinetwork environment, wherein the terminal has access to multiple networks and it resolves the retrieving of multimedia contents without direct intervention of a user.

In the future content providers might distribute a common set of digital services, e. g. news, digital radio, TV pictures and videos, via multiple digital networks, e. g. digital TV, digital radio, internet, mobile phone. A multinetwork environment designed according to the present invention can provide the framework to deliver such sophisticated services leveraging the synergies of the different digital media. The system according to the invention elaborates and defines the architecture for realizing such a digital data distribution over multi-access, multicharacteristic networks environment by way of the method and device to distribute digital data provided by at least one content provider over multiple networks to at least one user according to the present invention.

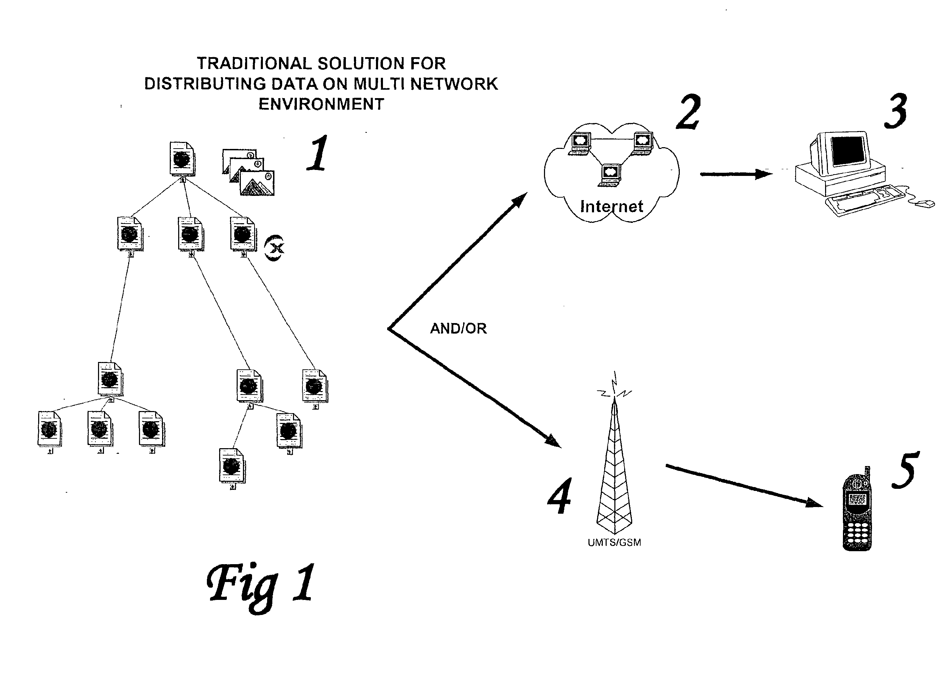

Fig. 1 shows a traditional data distribution system over a multinetwork system. A digital content, e. g. the exemplary shown digital content tree 1 is transmitted via the internet 2 to a first user terminal 3, e. g. a personal computer, and/or via an UMTS/GSM system 4 to a second user terminal 5, e. g. a mobile phone with WAP service.

According to this current scenario in a multinetwork data distribution system networks are used for tunnelling data over different paths for reaching different terminals. Along some network paths, the data is transformed and adapted to the terminal capabilities. In other words, the digital data content tree 1 shown in Fig. 1 is specially adapted for transmission to the first user terminal 3 via the internet by way of a special html programming on the one hand and, on the other hand, is specially adapted for the transmission to the second user terminal 5 via the UMTS/GSM system 4 by a special WAP programming.

Although this architecture solves some problems such as congestion and reachability, the digital distributed data is considered as a whole body and no synergies of having a multiple network system are available. Basically, this traditional approach is to flatten (seamless) the accessed different media for delivering the same kind of content without large rework on the data and leverage of a global set of protocols. This approach is fixed in respect to the data structure as well as the data distribution. An allocation of resources is done only statically.

The method and device according to the present invention, on the other hand, uses the differences of a multiple networks environment for modelling the data distribution over a collection of network systems and allows an application of a statistical model and a dynamic adaptive method for the data distribution on different networks. A smart terminal equipped with a multinetwork access can then retrieve the data transparently through different access points.

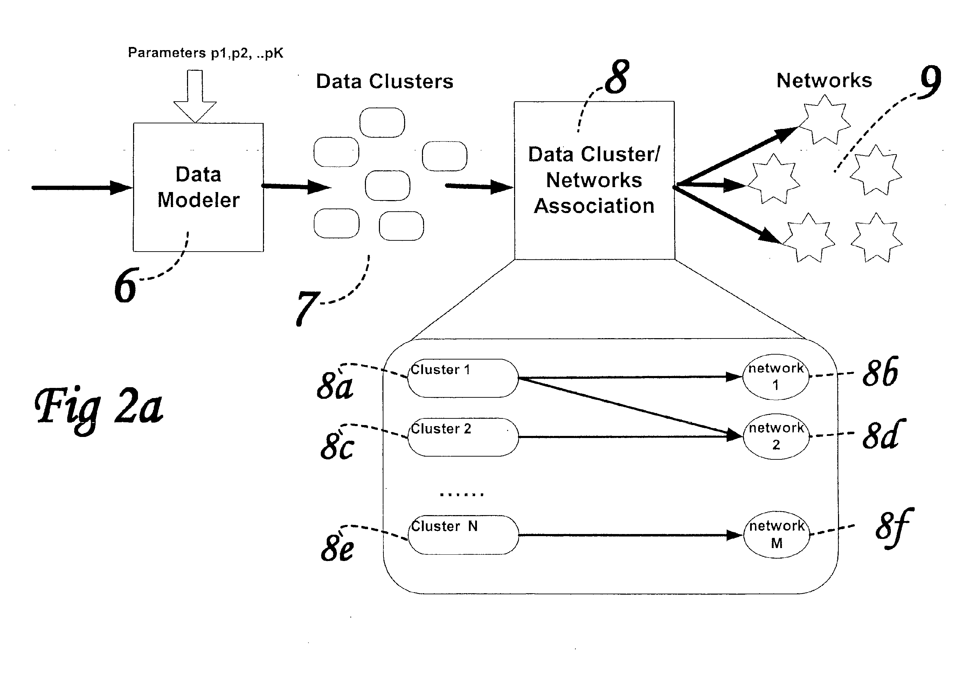

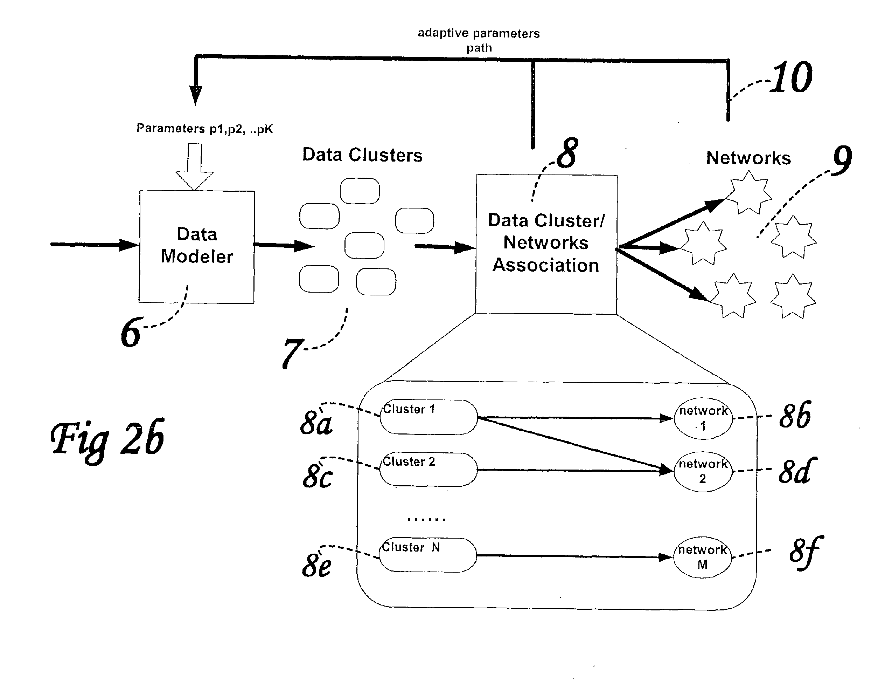

Fig. 2a shows a basic diagram for distributing data over multinetworks according to the present invention. Incoming digital data, such as the digital data content tree 1 shown in Fig. 1 is supplied to a data modeller 6 which separates and groups the digital data depending on a set of dynamic and/or static parameters into data clusters 7. A data cluster is a group of digital data that can be associated to one or more specific networks. After the clustering of the digital data the data clusters 7 are supplied via a data cluster/networks association 8 to different networks 9, i. e. the data clusters 7 are respectively associated to one or more different networks and then transmitted on the respective associated network(s).

In particular, the data modeller 6 receives as an input some digital contents, e.g. the WEB based digital data content tree 1, a stream of audio, ..., and a set of description parameters P1, P2, ..., PK. The input digital contents are generally not specifically formatted, e.g. according to WAP, or it is formatted with a neutral formatting format, like XML or HTML. The description parameters might be: the user access to a specific multimedia object, time of the day, the policy of the content provider to deliver free content over DAB during the night and move the same content over UMTS during the day, etc. Some of these parameters might be generated from specific network nodes, e.g. an internet HTTP server could collect the statistics of usage of particular pages and send these statistics as description parameters of these pages to the data modeller 6. The data modeller 6 uses specific algorithms to group the data into data clusters 7, wherein each cluster has a common characteristic, e. g. user access, data rate, quality of service (QoS), geographical location, ... . The data modeller 6 can produce such an association only once or it can periodically update the status of the current data clustering depending on the dynamic behaviour of some parameters, e.g. user access, network congestion, geographic coverage, ... . Once the clustering process is finished, each data cluster of the data clusters 7 is associated to a specific network by the data cluster/networks association 8. After the clustering, the transmission over the different networks takes the responsibility of transforming the data to the requirements of the specific network, e.g. according to WAP or GSM.

In the example shown in Fig. 2a, the first data cluster 8a is associated to the first network 8b and the second network 8d, the second data cluster 8c is associated to the second network 8d, and the Nth data cluster 8e is associated to the Mth network 8f. For example, a broadcasting medium will be chosen for a large user, wide interest content.

According to the present invention the further distribution and formatting of the data is preferably specifically resolved by the specific network management system, for example in case of a broadcasting system, the data is broadcasted, i. e. streamed over a unidirectional channel, while in case of a LAN network, for the same purpose the data is e. g. allocated to an internet server. The concept of handover between different networks might be arranged in a roaming structure, i.e. as an automatic mechanism to look for alternative channels or networks. The system according to the present invention can provide multiple choices for retrieving some data, e.g. using clusters partially over-covered. A terminal can then choose initially a preferred network or in case of e.g. a sudden disappearing thereof can switch to a second optional network.

This system according to the present invention therefore provides a general structure to distribute digital data provided by at least one content provided over multiple networks to at least one user. In particular,
- digital data can be described statically or dynamically depending on a certain number P of parameters dependent or independent on the time, e.g. by parameters pi(t) or pi, for example user access, interests, scalability, network congestion, quality of services, etc.,
- data distribution on multiple networks opens the possibility to adapt the parameters to specific network characteristics of the contemporarily usage of the networks themselves, for example GSM is a wireless lowband bidirectional channel with secure authentication mechanism, DAB and DVB-T are scalable broadcasting networks, and WLAN is a local network, etc.

A possible set of parameters describing the networks characteristics might be geographic location, e.g. national area, wide area, local area, micro area or personal network, available resources, reliability, or handover possibilities. Different service types might be data rate, quality of service, the type of domain, e.g. public, private, protected, and scalability.

The system according to the present invention shown in Fig. 2a can also be implemented using an adaptive path which triggers the parameters P1, P2, ..., PK input into the data modeller 6 e. g. for anticipating or reacting to particular data distribution problems, as it is shown in Fig. 2b, which shows the adaptive parameters path 10 as a feedback path from the networks 9 and from the data cluster/networks association 8 to the parameters P1, P2, ..., PK input to the data modeller 6. For example, the specific networks to which the data clusters are associated can dynamically provide information about the user access or the usage of the overall network resources, which can be used by the data modeller 6 to change the configuration and the cluster settings.

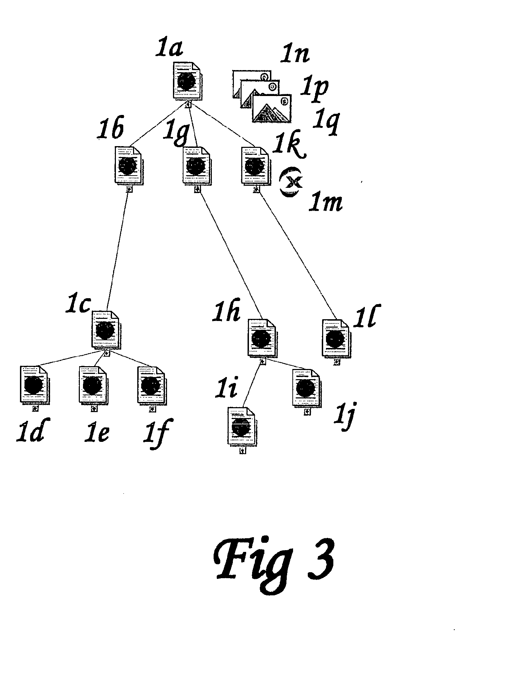

Fig. 3 shows the web-based digital data content tree 1 shown in Fig. 1 in more detail. The digital data content tree 1 comprises 12 pages, in particular a root page 1a, which comprises three links to first to third middle layer pages 1b 1g, 1k. The first middle layer page 1b comprises a link to a first lower layer page 1c which comprises three links to first to third leaf pages 1d, 1e, 1f. No further links are included in the leaf pages. The second middle layer page 1g provides a link to a second lower layer page 1h which is linked to a fourth leaf page 1i and a fifth leaf page 1j. The third middle layer page 1k is linked to a sixth leaf page 1l and comprises a data carousel 1m comprising three pictures 1n, 1p, 1q.

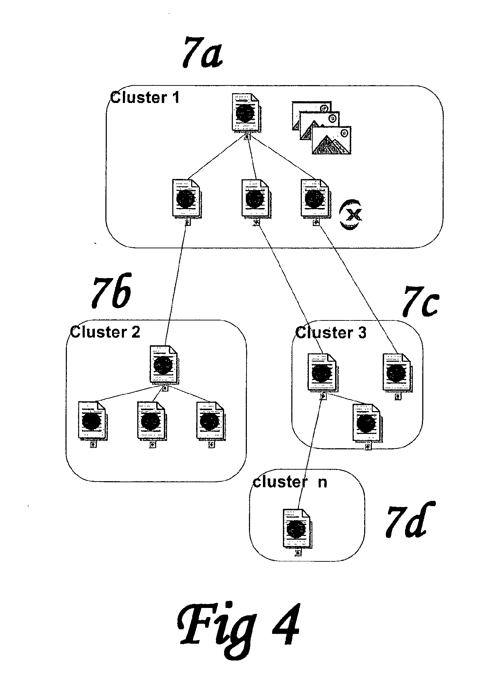

According to the present invention this digital content tree 1 might be clustered as shown in Fig. 4 so that a first cluster 7a comprises the root page 1a and the three middle layer pages 1b 1g, 1k including the data carousel 1m with the three pictures 1n, 1p, 1q, a second cluster 7b comprises the lower layer page 1c and the first to third leaf pages 1d to 1f, a third cluster 7c comprises the second lower layer page 1h and the fifth and sixth leaf pages 1j and 1l, and an nth cluster 7d comprises the fourth leaf page 1i.

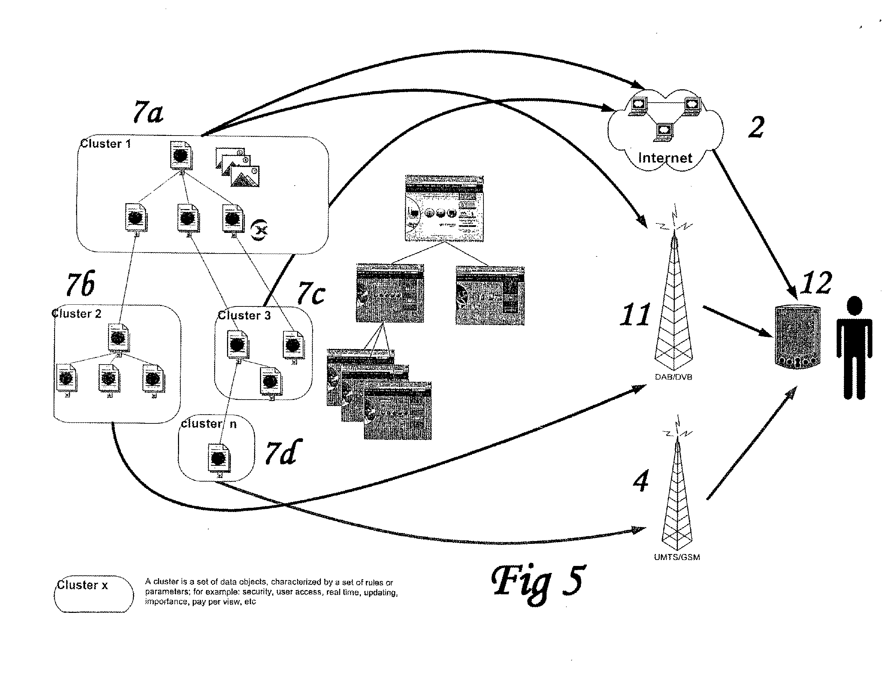

According to the present invention these data clusters can be associated to networks, e.g. as shown in Fig. 5. It is shown that the first cluster 7a is associated to the internet 2 and to a DAB/DVB network 11, the second cluster 7b is associated to the DAB/DVB network 11, the third cluster 7c is associated to the internet 2, and the nth cluster 7d is associated to the UMTS/GSM network 4. It is also shown that these clusters are transmitted accordingly via these networks to a third user terminal 12, e. g. a hand-held organiser which is capable of accessing all these networks to assemble the digital data content tree 1 which different parts are transmitted via the different networks.

As a result of the distribution algorithm, some data can be distributed over multiple networks. The association cluster/network as well as data/cluster is very flexible and can serve different kind of dynamic data distribution schemes. The clustering can e.g. be dependent on the time. For example, in such a case, the architecture can react to different congestion or usage patterns along the day, e. g. news HTML files can be forwarded to a mobile network or a fixed network depending on the time of the day so that during working hours a more fixed network usage is supported whereas while immediately after work mobile PDA services and in the evening the television network is focused.

Further, the architecture according to the present invention can also react to abrupt changes of the user access to specific data, for example during an important news service data supported through an internet portal can be redirected to a broadcasting system, e. g. DAB, DVB-T, or DVB.

Furthermore, in case of information which is based on the location of a user, a content provider can use the system according to the present invention for creating clusters based on the geographical position of target users, e. g. clusters which are only transmitted to networks in these geographical positions.

Furthermore, also specific network attributes might be specifically addressed on a multinetwork system in a particular easy way. For example, the secure characteristic of a mobile phone system can be leveraged for GSM electronic payment or pay TV. For example, a bank company or an e-commerce retailer can use a multinetwork system for advertising their catalogues of services so that internet access or broadcasting access is used for delivering the main body of the digital data, e. g. web pages describing services, query forms for collecting items, and as soon as the user wants to pay the selected items the data is accessed using a GSM mobile phone. The GSM mobile phone network system can be used to make payments using the telephone bills without any further requirement from the user. Also any other phone network system or network system in which the user is automatically billed when accessing said network system can be used according to the present invention to distribute digital data and the respective network system can be chosen by the content provider to determine the charges to be billed to the user, e.g. by choosing a network according to the wanted charge or choosing a predetermined access telephone number according to the wanted charge. Of course, it is also for other cases possible to adapt the data distribution according to specific qualities of a specific network, saving on one side network bandwidth for rich of content description brochures HTML pages and on the other side activating easy electronic payment using e. g. the GSM network.

Further, also without the background of electronic payment, the same concept can be applied for a digital TV/internet multinetwork environment. The main block of data for advertising the program of a TV channel can be done using a broadcasting medium or a cheap internet access and when the user decides to access the video stream, the terminal switches automatically to a DVB system, since the video stream itself is not transmitted using the broadcasting medium or internet access. According to the present invention the switch is designed at the content provider side, e.g. giving an optional network link. If the service should also be designed for user terminals, which do not have a DVB access, the content provider might also decide to additionally provide the video stream to an UMTS access. User terminals might then use the available networks.

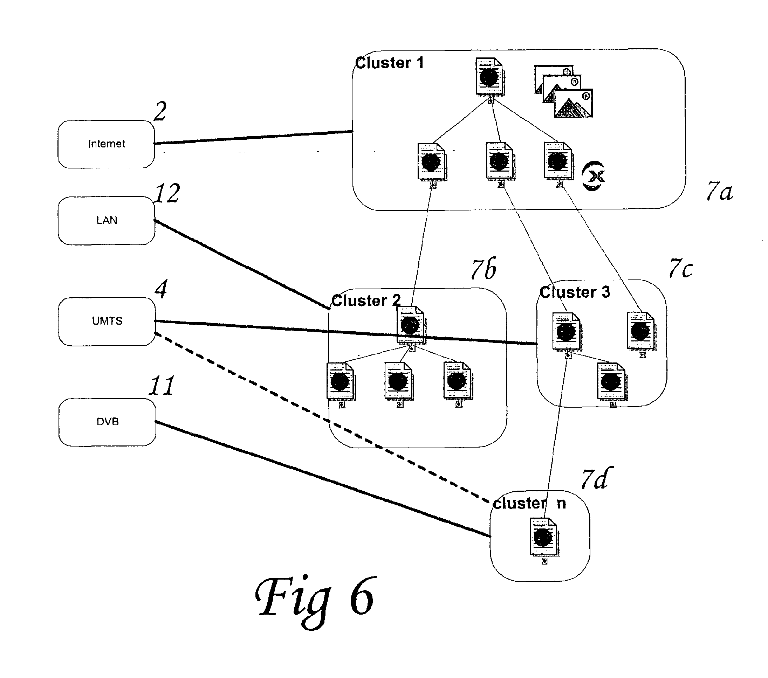

Such a scenario is exemplary depicted in Fig. 6 in which the nth cluster 7d with the fourth leaf page 7i of the digital data content tree 1 comprises the actual video stream which is assigned to the DVB network 11 as indicated by a solid line and might also be assigned to the UMTS network 4, as indicated by a slashed line. Further, in the shown example the second cluster 7b is assigned to a local area network 12, the third cluster 7c is assigned to the UMTS network 4, and the first cluster 7a is assigned to the internet 2.

Such a structure might be regarded as typical e. g. for the case of video services when e. g. in the first cluster electronic program guide information is transmitted, the second cluster comprises video services which should be freely accessible in a selected area, e. g. within a company, the third cluster transmits secure information about selected services, e. g. in case of a restricted access, a video on demand or a pay TV service, and the nth cluster 7d transmits a video stream in respect to the secure service description of the third cluster 7c.

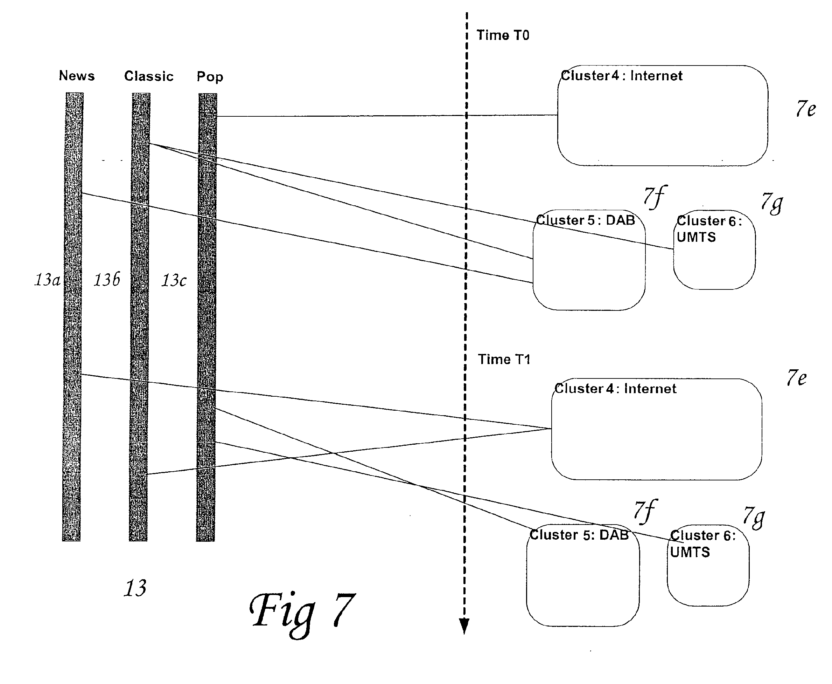

A further example for the advantages of the data distribution system according to the present invention is given in connection with Fig. 7 which shows an audio streaming over multiple networks in which the bandwidth usage and user pattern might be followed. Basically, the data objects of a stream are associated to different clusters and each cluster is associated to a different network. These associations might be changed by the data modeller 6 or the cluster/networks association 8 with the time. An audio stream 13 comprising three different services, namely news 13a, classic 13b, and pop 13c has different access patterns for different times. It is shown for a time T0 that the pop service 13c is transmitted via a fourth cluster 7e which is assigned to the internet, the classic service 13b is transmitted via a fifth cluster 7f which is assigned to DAB and a sixth cluster 7g which is assigned to UMTS and the news service 13a is also transmitted via the fifth cluster 7f which is assigned to a DAB network. At a time T1 the services are assigned to different clusters, namely the news service 13a is transmitted in the fourth cluster 7e which is assigned to the internet, the classic service 13b is also transmitted via the fourth cluster 7e which is assigned to the internet, and the pop service 13c is transmitted in the fifth cluster 7f which is assigned to the DAB network and the sixth cluster 7g which is assigned to the UMTS service.

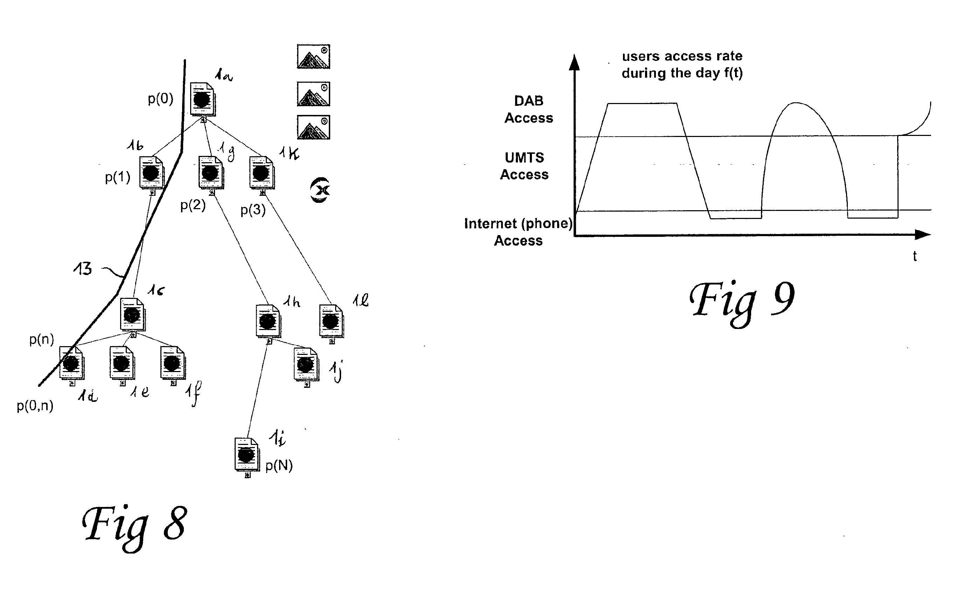

Such a system might be updated automatically, e. g. every hour, according to user access so that e. g. during the day the news service which is then accessed by a large number of users, is transmitted via a broadband network and during night time this service is shifted to a narrow band network, whereas during the day a classic or pop service is transmitted via a narrow band network and during the night through a broad band network. These access schemes might be rather fixed and based on statistical distributions or actual observations of user access patterns, e. g. as shown in Fig. 9, which might be based on probabilities of access of the different parts of the data, as shown in Fig. 8.

The data distribution and its optimization is performed in the data modeller 6. Preferably, a mathematic/heuristic model is supplied for clustering the digital information. The concept of cost functions might be used to model possible distribution patterns of digital content. These functions can e. g. be
- a fixed cost function in which parameters are fixed a priori or after analysis, which function gives a possible pattern for distributing data, e. g. as shown in Fig. 9, or
- a dynamic cost function in which case the input parameters of such a cost function are dependent e. g. on the variable time or other variables, such as network usage, e.g. using a close loop feedback, the input parameters can describe the real-time status of the network usage in which case the system will adapt the distribution pattern automatically thereto, wherein
both the static and dynamic model can use a statistical approach for describing the distribution pattern. For example, given an access probability for each single multimedia object, e.g. HTML page or JPG picture, the probability of crossing each branch of a web paged HTML tree can be deducted.

This statistical method for calculating the probability of accessing a page is shown in Fig. 8 which shows that the root page 1a has the probability p(0), the first middle layer page 1b has the probability p(1), the second middle layer page 1g has the probability p(2), the third middle layer page 1k has the probability p(3), the first leaf page 1d has the probability p(n), and the fourth leaf page 1i has the probability p(N). Given a certain distribution of the probability for each single object, i.e. the above pages, which might be HTML pages, the probability of a user navigating from the root page to each single leaf page can be calculated. A solid line 13 shows such a hypothetical path of a user along an HTML pages tree. In general, such a distribution of probability gives an idea about the more often accessed objects and helps to restructure a tree ,e.g. so that often accessed pages are located closer to the root, and to choose different networks according to their characteristics.

Normally, such distributions might be gained by a detailed study of user patterns along the time, e. g. day time, week days, etc., since different services, like web-based use services, a number of audio streams and a video stream might be accessed in a variable manner differently during week days and weekends, during a day itself, and so on. In each of the different times different user access patterns can be recognised, e. g. news are more likely accessed in hours before working time, during lunch break and in the evening, as it is shown in Fig. 9 which represents the a daily access rate, i.e. the access rate over time, of a particular multimedia object, such as a single HTML page, or a single radio stream, or a group of multimedia objects like pictures, etc., and here a news content. Given such a distribution, trigger values as indicated by horizontal lines in Fig. 9 might be set for each type of possible or wanted network access, e.g. during a high access time period the multimedia contents are distributed using DAB access, during a low rate access period a low bandwidth network like GSM is used, and so on. Such a model including the access rate and the set trigger values can be used for activating the data modeller 6 via its input parameters to redirect the content to different media, i.e. networks. As an example, Fig. 9 further indicates that news should be transmitted via DAB in the morning hours, during lunch break and in the evening, via internet (phone) access between the morning hours and lunch break and between lunch break and the evening hours and in the times in-between internet access and DAB access via UMTS access. Further, different bandwidths might be assigned during different times dependent on the different network capabilities.

As an implementation example the digital data can be described using a metadata structure, for example an HTML page should or an audio stream can be described using metadata. In this case, a specific mechanism like an automatic changing URL scheme can be applied to realize the changing data to cluster association or the changing cluster to network association. An automatic changing URL scheme can be regarded as a general URL scheme (like void://) that is automatically changed to a specific URL scheme, like HTTP, DAB, FTP, etc.) by the data modeller 6. As mentioned above, such a change can be done automatically triggered by an external input or by the conditions of the networks using adaptive feedback path. On the receiver side, a smart data container, e. g. browser, can resolve the URL scheme in case of user preferences, for example in case a web page contains a multiple choice URL for retrieving the same resources. For example, the input HTML page before the data modeller 6 might contain an abstract URL scheme to the next page, like "void://xxx/base/video.html", in which case the modeller might adapt the scheme to the possible available network:
- One choice: "http://myserver/base/video.html"
- Multiple choice: url = mn://<url1> | <url2>, where
   url1 = http://myserver/base/video.html, and
   url2 = DAB://xyz/base/video.html,
   in which case the resource is resolved at the terminal side depending on the choices; it is e.g. possible that a user or a terminal might select an available network from a list in which all of the multiple choices available at the terminal side are shown; also, an "always connected" scenario might be realized in which the terminal side automatically switches to a different
   available choice in case the currently selected resource gets switched off.
On the receiver side a data container resolves the URL links, e.g. in a similar way as in an internet browser.

According to the present invention a seamless network environment is used in particular according to the differences of specific networks. New data distribution patterns can be easily implemented according to the present invention and using the present invention implemented as a middleware architecture very sophisticated services can be designed. Also, the present invention applied to a common protocol layer for seamlessly integrating multiple networks can be useful at the network layer, since over IP or any other common network/transport protocol there is a need of an architecture for delivering the data and building flexible services, which is provided according to the present invention. Therewith, bandwidth usage can be optimized in a multiple network system and new interactive and flexible multimedia services can be built.

## Claims

1. Method to distribute digital data provided by at least one content provider over multiple networks to at least one user, **characterized by** the following steps:
- grouping the digital data to be distributed into clusters of digital data with common distribution and/or access characteristics,
- associating at least one network to each cluster of digital data, and
- transmitting each cluster of digital data via the associated at least one network.

2. Method according to claim 1, **characterized in that** said distribution characteristics of the digital data are set by the respective corresponding content provider.

3. Method according to claim 1 or 2, **characterized by** determining the distribution characteristics adaptively according to the status of the multiple networks.

4. Method according to anyone of the preceding claims, **characterized in that** said access characteristics of the digital data are determined based on demands and/or behaviour of the respective corresponding at least one user.

5. Method according to anyone of the preceding claims, **characterized in that** said grouping of the digital data to be distributed into clusters is performed based on a mathematic-heuristic model.

6. Method according to anyone of the preceding claims, **characterized by** periodically updating said grouping of the digital data to be distributed into clusters of digital data with common distribution and/or access characteristics.

7. Method according to anyone of the preceding claims, **characterized in that** said at least one network is associated to a cluster of digital data by way of a metadata structure.

8. Method according to anyone of the preceding claims, **characterized by** associating a network to a cluster of digital data according to the status of the multiple networks.

9. Method according to anyone of the preceding claims, **characterized in that** a cluster of digital data is transmitted via a network according to a corresponding specific network management system of said network.

10. Computer program product, comprising computer program means adapted to perform the method steps or parts thereof as defined in anyone of claims 1 to 9 when being executed on a computer, digital signal processor, or the like.

11. Device to distribute digital data provided by at least one content provider over multiple networks to at least one user, **characterized by**
- a data modeller for grouping the digital data to be distributed into clusters of digital data with common distribution and/or access characteristics and for associating at least one network to each cluster of digital data, and
- distribution means for distributing the respective clusters to said multiple networks for transmitting each cluster of digital data via the associated at least one network.

12. Device according to claim 11, **characterized by** a status determinator for determining the distribution characteristics or an associating scheme adaptively according to the status of the multiple networks.

13. Device according to claim 11 or 12, **characterized by** a user behaviour determinator for determining the access characteristics of the digital data according to demands and/or behaviour of the respective corresponding at least one user.

14. Device according to anyone of claims 11 to 13, **characterized by** a model builder to determine a mathematic-heuristic model for said data modeller on which said grouping of the digital data to be distributed into clusters is based.

15. Device according to anyone of claims 11 to 14, **characterized by** a metadata generator within said data modeller to determine metadata which associates a data cluster to at least one network and to attach said metadata to said cluster.

16. Method for a content provider to charge a user for digital data provided through at least one of multiple networks by said content provider to said user, **characterized by** the following steps:
- grouping the digital data to be distributed into clusters of digital data with a common charge characteristic,
- based on said charge characteristic, associating at least one network to each cluster of digital data according to a charge which the user has to pay to a network provider when accessing said data though said at least one network, and
- transmitting each cluster of digital data via the associated at least one network.

17. Method according to claim 16, **characterized in that** said data is provided as broadcast data or as individually requested data.

18. Method according to claim 16 or 17, **characterized by** distributing said digital data according to the method as defined in anyone of claims 1 to 9.
